# EUROPÄISCHE PATENTSCHRIFT

(11) **EP 3 138 798 B1**
(45) Veröffentlichungstag und Bekanntmachung des Hinweises auf die Patenterteilung: **09.10.2019**
(21) Anmeldenummer: 15183925.5
(22) Anmeldetag: 04.09.2015
(51) Int. Cl.: B65H 75/40, B65H 75/44, H02G 11/02

(54) **LEITUNGSROLLER**
CABLE REEL
ENROULEUR DE CABLES

(43) Veröffentlichungstag der Anmeldung: 08.03.2017
(73) Patentinhaber: Brennenstuhl GmbH & Co. KG, 72074 Tübingen (DE)
(72) Erfinder: Brennenstuhl, Hugo, 72074 Tübingen (DE)
(74) Vertreter: Patentanwälte Magenbauer & Kollegen Partnerschaft mbB

(56) Entgegenhaltungen:
- WO-A2-2004/004286
- DE-A1- 10 224 472
- DE-T2- 60 311 337
- DE-U- 7 331 183
- DE-U1-202010 013 009
- GB-A- 781 555
- NL-C2- 1 015 709
- US-A- 4 114 736
- US-A1- 2011 076 879
- US-A1- 2012 320 546

## Beschreibung

Die Erfindung betrifft einen Leitungsroller, insbesondere Kabeltrommel, mit einer ersten Leitungsroller-Stirnseite und einer diese entgegengesetzten zweiten Leitungsroller-Stirnseite und mit einem an einem Trommelträger um eine Trommelachse drehbar gelagerte Trommelkörper zum Aufwickeln einer flexiblen Leitung, insbesondere Kabel, wobei an der ersten Leitungsroller-Stirnseite wenigstens eine elektrische Schnittstelle zur Stromversorgung wenigstens eines elektrischen Verbrauches angeordnet ist.

Derartige Leitungsroller, insbesondere Kabeltrommeln, sind bereits seit langem bekannt. So offenbart beispielsweise die EP 1 760 024 einen Leitungsroller in Form einer Kabeltrommel, mit einem Trommelträger in Form eines Standgestells, das aus einem einzelnen Rohr gebogen ist und sowohl die Trommelachse als auch einen Handgriff zum Tragen des Leitungsrollers zur Verfügung stellt. Der Trommelkörper der Kabeltrommel besitzt einen Trommelzylinder und zwei jeweils innenseitig an den Trommelzylinder angesetzte Trommelscheiben mit gegenüber dem Trommelzylinder bzw. Trommelkern größerem Durchmesser. Zwischen den beiden Trommelscheiben ist ein Wickelraum zum Aufwickeln einer flexiblen Leitung, insbesondere eines Kabels ausgebildet. An der vorderen Trommelscheibe ist eine Steckdosenplatte mit mehreren Steckdosen zum Anschluss von elektrischen Verbrauchern angeordnet. An der rückseitigen Trommelscheibe mündet das Gestell in den Trommelkern und bildet dort mit einem Abschnitt das Drehlager für den Trommelkörper.

Die DE 102 24 472 A1 beschreibt eine Kabeltrommel mit einer Steckdose für Netzspannung und mit einer drehbar gelagerten Steckdose, die auf eine Gleich- oder Wechselspannung eingestellt werden kann.

Die NL 1 015 709 C2 beschreibt eine Verlängerungskabeleinrichtung mit einer Winde und Steckdosen, die an verschiedenen Seiten der Verlängerungskabeleinrichtung angeordnet sind.

Die DE 603 11 337 T2 beschreibt eine Vorrichtung mit zwei Hauptteilen, wobei ein Hauptteil einen Kabelaufwickler sowie an zwei verschiedenen Seiten angeordnete Stecker aufweist.

Die DE 20 2010 013 009 U1 beschreibt eine Kabeltrommel mit Ausgangssteckvorrichtungen, die sowohl an einer vorderen Seitenwand als auch an einer hinteren Seitenwand angeordnet sein können.

Die US 4, 114, 736 A beschreibt eine Kabeltrommel mit elektrischen Verbindungen zur Verbindung der Kabeltrommel und dem Gehäuse und zum Verbinden der Gehäuse mit einer Stromquelle.

Die DE 73 31 183 U beschreibt einen Leitungsroller, bei welchem der eigentliche Rollenträger geschützt in einem Gehäuse aus Kunststoff, Blech oder Leichtmetall abisoliert gelagert und als Kabelrolle mit einer oder mehreren integrierten Stromabnahmesteckdosen ausgerüstet ist.

Aufgabe der Erfindung ist es, einen Leitungsroller der eingangs erwähnten Art zu schaffen, der gegenüber Leitungsrollern aus dem Stand der Technik eine größere Funktionalität aufweist.

Diese Aufgabe wird durch einen Leitungsroller mit den Merkmalen des unabhängigen Anspruchs 1 gelöst. Weiterbildungen der Erfindung sind in den Unteransprüchen dargestellt.

Der erfindungsgemäße Leitungsroller zeichnet sich dadurch aus, dass wenigstens eine nicht an der ersten Trommelkörper-Stirnseite angeordnete weitere elektrische Schnittstelle vorgesehen ist.

Der erfindungsgemäße Leitungsroller bietet also die Möglichkeit, nicht nur an der ersten Leitungsroller-Stirnseite elektrische Verbraucher anzuschließen, sondern auch an einer anderen Stelle über eine weitere elektrische Schnittstelle. Es ergeben sich also erweiterte Anschlussmöglichkeiten für elektrische Verbraucher. Dadurch ist der Leitungsroller leichter und schneller bedienbar, da der Benutzer nicht auf den Anschluss der elektrischen Verbraucher an einer Seite des Leitungsrollers angewiesen ist.

Die elektrische Schnittstelle an der ersten Trommelkörper-Stirnseite und/oder die weitere elektrische Schnittstelle weist Steckdosen zum Anschluss elektrische Verbraucher auf. Ferner kann die elektrische Schnittstelle und/oder die weitere elektrische Schnittstelle auch Anschlussmöglichkeiten zum internen Anschluss am Leitungsroller angeordneter elektrischer Verbraucher aufweisen. Bei den elektrischen Verbrauchern handelt es sich beispielsweise um Leuchten, Lampen, Radios etc.

Die Schnittstelle und/oder die weitere elektrische Schnittstelle weist wenigstens eine Datenschnittstelle und/oder wenigstens eine Bus-Schnittstelle auf. Ferner kann die Schnittstelle und/oder die weitere elektrische Schnittstelle wenigstens eine Lade-Schnittstelle aufweisen.

Es ist also beispielsweise möglich, an der elektrischen Schnittstelle an der ersten Trommelkörper-Stirnseite hauptsächlich Steckdosen zum Anschluss elektrischer Verbraucher, die mit Netzspannung zu versorgen sind, vorzusehen und die weitere elektrische Schnittstelle beispielsweise mit wenigstens einer Daten-Schnittstelle und/oder wenigstens einer Bus-Schnittstelle und zweckmäßigerweise wenigstens einer Lade-Schnittstelle auszustatten. Selbstverständlich ist es möglich, an der Schnittstelle an der ersten Trommelkörper-Stirnseite ebenfalls eine Daten-Schnittstelle und/oder Bus-Schnittstelle und zweckmäßigerweise eine Lade-Schnittstelle anzuordnen. Jedenfalls ist die Kombination von Steckdosen, Daten-Schnittstellen, Bus-Schnittstelle und zweckmäßigerweise Lade-Schnittstellen beliebig an den beiden elektrischen Schnittstellen. Bei der Bus-Schnittstelle kann es sich beispielsweise um eine USB-Schnittstelle handeln. Bei der Lade-Schnittstelle kann es sich beispielsweise um eine Schnittstelle zur Aufladung von Akkus oder zum Aufladen von Handys, Smartphones oder dergleichen handeln. Die elektrischen Schnittstellen sind zum Anschluss verschiedenartigster elektrischer Verbraucher geeignet, beispielsweise Leuchten, Lampen, Elektrowerkzeuge, Radios etc.

Es ist möglich, dass die wenigstens eine Daten-Schnittstelle zur drahtgebundenen oder drahtlosen Datenübertragung eingerichtet ist. Eine drahtlose Datenübertragung kann beispielsweise mittels Funk erfolgen. Es wäre beispielsweise möglich, den Leitungsroller mit einem Funkempfänger auszustatten, über den Daten empfangen werden können, die beispielsweise eine Schaltfunktion auslösen können, beispielsweise zum Ein- oder Ausschalten wenigstens einer der elektrischen Schnittstellen.

Bei einer Weiterbildung der Erfindung ist die elektrische Schnittstelle an einer der ersten Leitungsroller-Stirnseite zugeordneten ersten Trommelkörper-Stirnseite angeordnet.

Beim erfindungsgemäßen Leitungsroller ist die wenigstens eine weitere elektrische Schnittstelle an der zweiten Leitungsroller-Stirnseite angeordnet. Dadurch ist es möglich, an beiden Seiten des Leitungsrollers eine Stromversorgung für elektrische Verbraucher bereitzustellen. Die elektrischen Verbraucher können also an der ersten Leitungsroller-Stirnseite und/oder an der zweiten Leitungsroller-Stirnseite angeschlossen werden. Dadurch ergibt sich eine große Flexibilität und eine bessere Bedienbarkeit gegenüber herkömmlichen Leitungsrollern.

Erfindungsgemäß weist der Trommelträger einer der ersten Leitungsroller-Stirnseite zugeordnete erste Trommelträger-Stirnseite und eine dieser entgegengesetzte zweite Trommelträger-Stirnseite auf, wobei die weitere elektrische Schnittstelle am Trommelträger, an dessen zweiter Trommelträger-Stirnseite angeordnet ist. Die weitere elektrische Schnittstelle befindet sich also nicht am Trommelkörper, sondern am Trommelträger und wird daher bei der Bedienung des Leitungsrollers zum Aufwickeln der flexiblen Leitung, insbesondere des elektrischen Kabels, nicht mitverdreht, macht also die Trommeldrehung nicht mit, sodass elektrische Verbraucher an der weiteren elektrischen Schnittstelle eingesteckt bleiben können, wenn die flexible Leitung auf-oder abgewickelt wird. Auch dies steigert die Variabilität gegenüber herkömmlichen Leitungsrollern.

Bei einer Weiterbildung der Erfindung ist der Trommelträger gehäuseartig ausgebildet, mit einer die erste Trommelträger-Stirnseite definierenden ersten Abschlusswand und einer die zweite Trommelträger-Stirnseite definierenden zweiten Abschlusswand, die gemeinsam einen Aufnahmeraum begrenzen, in dem der Trommelkörper aufgenommen ist. Der Trommelträger kann den Trommelkörper also einhausen, wodurch dieser insbesondere vor Beschädigung geschützt ist. Der Trommelträger kann alternativ auch durch ein Standgestell, beispielsweise aus einem gebogenen Rohr gebildet sein. Die elektrischen Schnittstellen können dann beispielsweise an der ersten und zweiten Trommelkörper-Stirnseite angeordnet sein

Bei einer Weiterbildung der Erfindung ist der Aufnahmeraum für die Aufnahme des Trommelkörpers in Umfangsrichtung bzw. peripher um die Trommelachse partiell offen. Dadurch lässt sich trotz der Einhausung bzw. des gehäuseartigen Trommelträgers von allen Seiten her auf den Trommelkörper zugreifen.

In besonders bevorzugter Weise sind die beiden Abschlusswände durch mehrere in Umfangsrichtung der Trommelachse verteilt angeordnete Verbindungsstreben miteinander verbunden. Die Verbindungsstreben lassen sich beispielsweise einerseits an der einen Abschlusswand und andererseits an der anderen Abschlusswand befestigen. Die Befestigung der Verbindungsstreben erfolgt zweckmäßigerweise von den jeweiligen Außenseiten der Abschlusswände her. Hierzu können in den Abschlusswänden Montagelöcher vorgesehen sein, über die sich Befestigungsmittel in Eingriff mit den Verbindungsstreben bringen lassen, wodurch die Verbindungsstreben an den Abschlusswänden befestigt werden.

In besonders bevorzugter Weise bilden in Umfangsrichtung zueinander benachbarte Verbindungsstreben und zugeordnete Randbereiche der Abschlusswände fensterartige Zugriffsöffnungen. Es ist also möglich, die flexible Leitung, insbesondere das Kabel, über jede der fensterartigen Zugriffsöffnungen auf- oder abzuwickeln.

Es ist möglich, dass die sich zwischen benachbarten Verbindungsstreben erstreckenden Randbereiche gleich lang sind.

Es ist möglich, dass die Abschlusswände außen polygonförmig konturiert sind. Es ist beispielsweise möglich, dass die Abschlusswände eine rechteckige, insbesondere quadratische, dreieckige, fünfeckige, sechseckige etc. Form haben. Bei bevorzugt gleich langen Randbereichen sind dies Quadrate, gleichseitige Dreiecke, regelmäßige Fünf- oder Sechsecke etc.

In besonders bevorzugter Weise bilden die Randbereiche bezüglich der Verbindungsstreben quer zur Trommelachse vorstehende Abstellflächen. Der Leitungsroller kann also auf diesen Abstellflächen abgestellt werden. Da die beiden Abschlusswände einen Abstand zueinander aufweisen, der größer ist als der zwischen zwei Trommelscheiben des Trommelkörpers ausgebildete Wickelraum, lässt sich der Leitungsroller auf Grund der dadurch entstehenden relativ großflächigen Abstellflächen standsicher abstellen. Ferner gibt es keine bevorzugte Abstellfläche, da die Abstellflächen in Umfangsrichtung der Trommelachse rundum angeordnet sind. Es ist also egal, auf welche Abstellfläche der Leitungsroller abgestellt ist, seine Funktion ist hiervon nicht beeinträchtigt.

Ferner lässt sich der gehäuseartige Trommelträger auch funktionell für weitere Aufgaben nutzen. Beispielsweise ist er als Hocker oder als Montageunterlage nutzbar. Am Trommelträger können beispielsweise auch Rollen angebracht werden, wodurch sich der gesamte Leitungsroller verfahren lässt.

Bei einer Weiterbildung der Erfindung weist der Trommelkörper einer der ersten Trommelkörper-Stirnseite entgegengesetzte zweite Trommelkörper-Stirnseite auf, der die die zweite Trommelträger-Stirnseite definierende Abschlusswand des Trommelträgers vorgelagert ist.

Am Trommelträger kann beispielsweise eine insbesondere bezüglich des Trommelträgers ortsfeste Haspel angeordnet sein, an der sich unabhängig vom Trommelkörper eine weitere flexible Leitung, insbesondere weiteres Kabel auf- oder abwickeln lässt. Das auf die Haspel aufwickelbare weitere Kabel kann über eine am Leitungsroller vorhandene elektrische Schnittstelle elektrisch versorgt werden oder kann ein unabhängiges Verlängerungskabel mit Stecker und Kupplung sein. Die Haspel kann lösbar am Trommelträger befestigt sein, sodass sie eine separat vom Trommelkörper handhabbare Wickelvorrichtung zum Aufwickeln oder Abwickeln von flexiblen Leitungen bereitstellt. Zweckmäßigerweise befindet sich die weitere elektrische Schnittstelle an der Haspel, wodurch diese als vollwertige Kabelhaspel eingesetzt werden kann, an der elektrische Verbraucher anschließbar sind.

Bei einer Weiterbildung der Erfindung sind der zweiten Abschlusswand Lagermittel zur Drehlagerung des Trommelkörpers zugeordnet, wobei vorzugsweise an der zweiten Abschlusswand eine zu den Lagermitteln gehörender Lagerzapfen angeordnet ist, insbesondere angeformt ist, auf den der Trommelkörper drehbar gelagert ist.

Technische Beispiele, die zur Erläuterung der Erfindung hilfreich sind, sind in der Zeichnung dargestellt und werden im Folgenden näher erläutert. In der Zeichnung zeigen:
- Figur 1: eine perspektivische Darstellung mit Sicht auf die erste Leitungsroller-Stirnseite eines technischen Beispiels eines Leitungsrollers,
- Figur 2: eine perspektivische Darstellung des Leitungsrollers von Figur 1, mit Sicht auf die zweite Leitungsroller-Stirnseite mit der weiteren elektrischen Schnittstelle,
- Figur 3: eine Seitenansicht auf die zweite Leitungsroller-Stirnseite des Leitungsrollers von Figur 1,
- Figur 4: eine Seitenansicht auf die erste Leitungsroller-Stirnseite des Leitungsrollers von Figur 1,
- Figur 5: eine Seitenansicht auf den Umfang des Leitungsrollers von Figur 1 mit Trommelkörper ohne flexible Leitung,
- Figur 6: einen Längsschnitt durch die Kabeltrommel entlang der Linie VI-VI in Figur 4,
- Figur 7: eine perspektivische Ansicht eines zweiten technischen Beispiels eines Leitungsrollers, wobei hier das Netzanschlusskabel nicht auf dem Trommelkörper aufgewickelt ist,
- Figur 8: eine Seitenansicht auf eine an der zweiten Leitungsroller-Stirnseite angeordnete Haspel,
- Figur 9: eine Seitenansicht auf den Umfang der Haspel von Figur 8,
- Figur 10: eine perspektivische Ansicht eines dritten technischen Beispiels eines Leitungsrollers mit Sicht auf die erste Leitungsroller-Stirnseite,
- Figur 11: eine Seitenansicht auf die erste Leitungsroller-Stirnseite des Leitungsrollers von Figur 10,
- Figur 12: eine perspektivische Ansicht eines vierten technischen Beispiels eines Leitungsrollers,
- Figur 13: eine Seitenansicht auf die erste Leitungsroller-Stirnseite des Leitungsrollers von Figur 12,
- Figur 14: eine perspektivische Ansicht eines fünften technischen Beispiels eines Leitungsrollers und
- Figur 15: eine Seitenansicht auf die erste Leitungsroller-Stirnseite des Leitungsrollers von Figur 14.

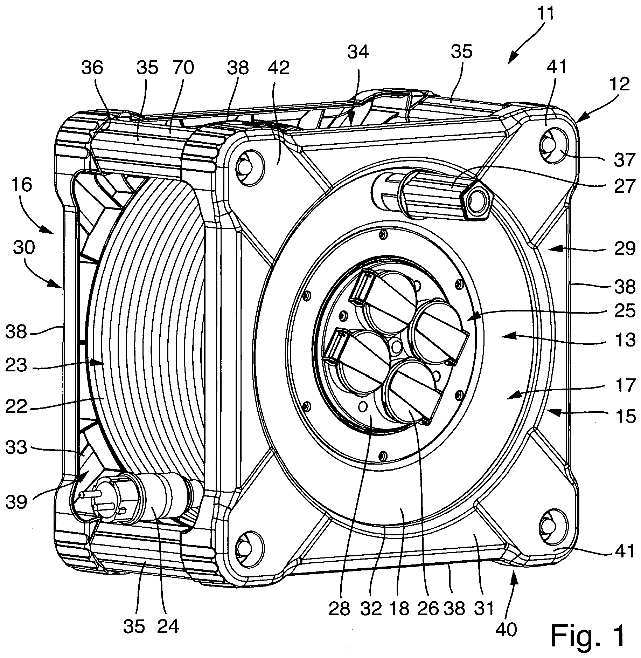

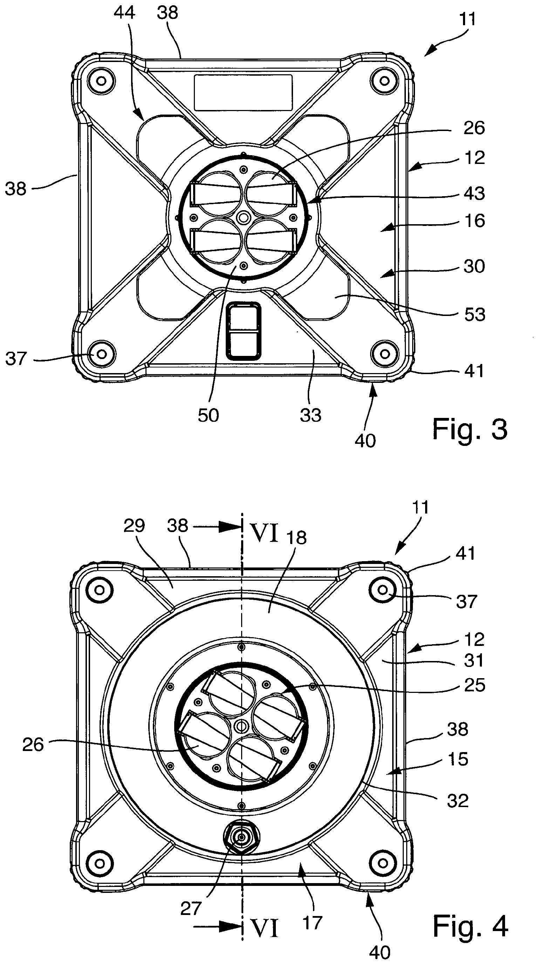

Die Figuren 1 bis 6 zeigen ein erstes technisches Beispiel eines tragbaren Leitungsrollers 11, der im Folgenden beispielhaft in Form einer Kabeltrommel gezeigt und beschrieben ist.

Wie insbesondere in Figur 1 dargestellt, besitzt der Leitungsroller 11 einen gehäuseartigen, nach Art eines Käfigs ausgebildeten Trommelträger 12, an dem ein Trommelkörper 13 um eine Trommelachse 14 drehbar gelagert ist. Der Trommelkörper 13 dient zum Aufwickeln bzw. Abwickeln einer flexiblen Leitung in Form eines elektrischen Kabels.

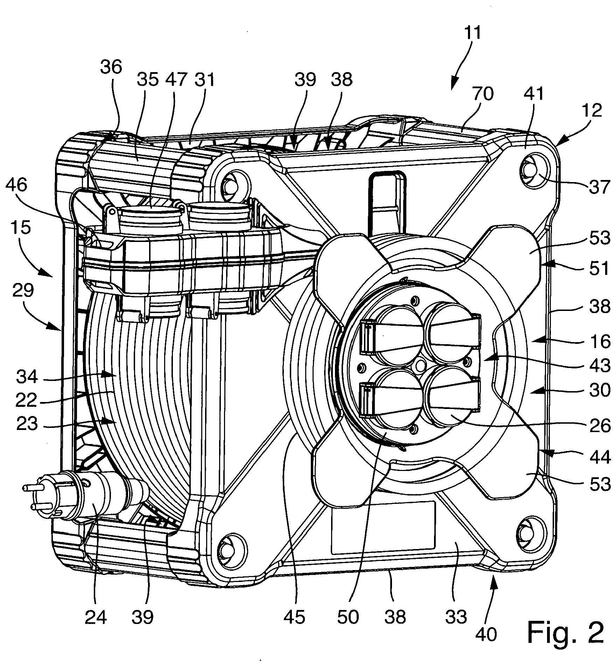

Wie die Zusammenschau der Figuren 1 und 2 zeigt, besitzt der Leitungsroller 11 insgesamt eine erste Leitungsroller-Stirnseite 15, die auch als Vorderseite des Leitungsrollers 11 bezeichnet werden könnte und eine dieser entgegengesetzte zweite Leitungsroller-Stirnseite 16, die auch als Rückseite des Leitungsrollers 11 bzw. der Kabeltrommel bezeichnet werden könnte.

Wie insbesondere in Figur 1 gezeigt, ist der ersten Leitungsroller-Stirnseite 15 eine erste Trommelkörper-Stirnseite 17 zugeordnet. Die erste Trommelkörper-Stirnseite 17 wird von einer Außenseite einer vorderen Trommelscheibe 18 des Trommelkörpers 13 definiert. Zusätzlich zur vorderen Trommelscheibe 18 besitzt der Trommelkörper 13 einen zylindrischen Trommelkern 19 und eine am anderen Ende des Trommelkerns 19, der vorderen Trommelscheibe 18 gegenüberliegende, hintere Trommelscheibe 20. Die beiden Trommelscheiben 18, 20 besitzen gegenüber dem Trommelkern 19 einen deutlich größeren Durchmesser.

Die einander gegenüberliegenden Innenseiten der beiden Trommelscheiben 18, 20 begrenzen einen Wickelraum 21 zum Aufwickeln des Kabels 22. Dabei wird das Kabel 22 beim Aufwickeln an die Mantelfläche des Trommelkerns 19 in Anlage gebracht, bis dieses vollständig mit dem Kabel 22 bedeckt ist, wobei dann anschließend eine zweite Kabellage über die auf dem Trommelkern 19 befindliche erste Kabellage aufgewickelt wird. Insgesamt entsteht dadurch beim Aufwickeln ein Kabelwickel 23, dessen Wickeldurchmesser beim Aufwickeln zunimmt und entsprechend beim Abwickeln abnimmt. Das elektrische Kabel 22 ist einenends zur Kontaktierung nachfolgend noch näher beschriebener Komponenten fest mit dem Trommelkern 19 verbunden und besitzt andererseits im gezeigten Beispielsfall des ersten technischen Beispiels einen Netzstecker 24 zum Anschließen an eine Netz-Steckdose.

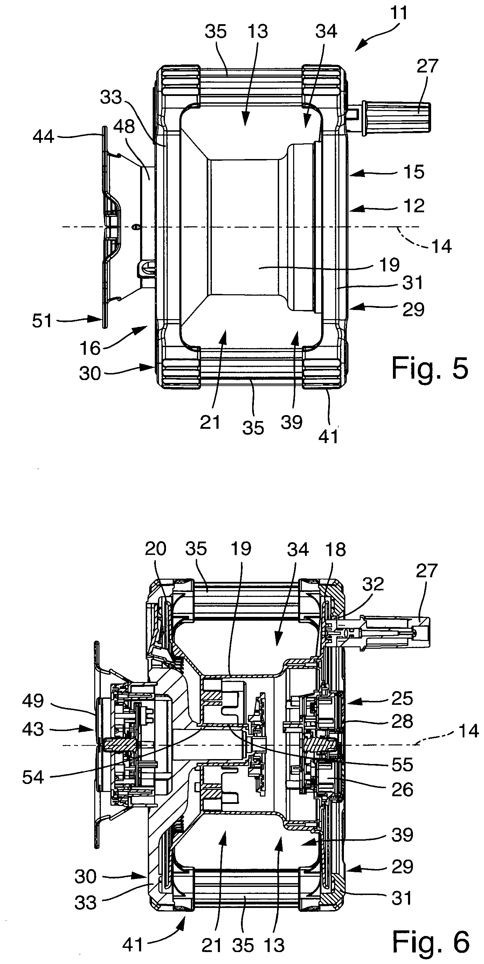

Wie insbesondere in Figur 6 gezeigt, ist der Trommelkörper 13 ein einteiliges Bauteil, d.h. Trommelkern 19 und die beiden Trommelscheiben 18, 20 sind einstückig miteinander verbunden. Zweckmäßigerweise besteht der Trommelkörper 13 aus Kunststoffmaterial. Es ist selbstverständlich auch möglich, den Trommelkörper 13 modulartig aufzubauen, insbesondere indem die beiden Trommelscheiben am Trommelkern lösbar befestigt sind.

Wie insbesondere in Figur 1 gezeigt, befindet sich an der ersten Leitungsroller-Stirnseite 15, beispielshaft an der ersten Trommelkörper-Stirnseite 17, also an der Vorderseite der vorderen Trommelscheibe 18, eine elektrische Schnittstelle 25. Die elektrische Schnittstelle 25 weist im Beispielsfall mehrere Steckdosen 26, beispielsweise vier an der Zahl, zum Anschluss elektrischer Verbraucher auf. Die Steckdosen 26 sind gemäß gezeigtem technischen Beispiel als Schutzkontakt-Steckdosen mit selbstschließenden Deckeln ausgebildet.

An der ersten Trommelkörper-Stirnseite 17 befindet sich ferner ein Drehgriff 27, der von der ersten Trommelkörper-Stirnseite 17 nach außen abragt und der zur Einleitung einer Drehbewegung auf den Trommelkörper 13 zum Auf- oder Abwickeln des Kabels 22 dient. Es ist möglich, den Drehgriff 27 mit einem Gelenk auszustatten, wodurch er im Nichtgebrauchszustand in eine im Wesentlichen parallel zur ersten Trommelkörper-Stirnseite 17 ausgerichtete Nichtgebrauchslage verlagerbar ist. Der Drehgriff 27 ist so ausgestaltet, dass auf ihn gegebenenfalls Verlängerung aufsteckbar ist.

Die Steckdosen 26 der elektrischen Schnittstelle 25 befinden sich an einer Steckdosenplatte 28, die eine Öffnung in der vorderen Trommelscheibe 18 durchsetzt und mit geeigneten Befestigungsmitteln, beispielsweise Schrauben, an den Trommelkern 19 geschraubt ist. Im gezeigten Beispielsfall dreht sich die Steckdosenplatte 28 bei Einleitung einer Drehbewegung auf den Trommelkörper 13 mit. Alternativ könnte die Steckdosenplatte feststehend und über einen Drehkontakt elektrisch verbunden sein.

Wie insbesondere in den Figuren 1 und 2 gezeigt, ist der Trommelträger 12 gehäuseartig ausgebildet und bildet eine Art Käfig für den darin drehbar gelagerten Trommelkörper 13. Der Trommelträger 12 besitzt eine der ersten Leitungsroller-Stirnseite 15 zugeordnete erste Trommelträger-Stirnseite 29 und eine dieser entgegengesetzte, der zweiten Leitungsroller-Stirnseite 16 zugeordnete zweite Trommelträger-Stirnseite 30. Die erste Trommelträger-Stirnseite 29 wird von einer ersten Abschlusswand 31 des Trommelträgers 12 gebildet. Die erste Trommelträger-Stirnseite 29 bildet daher die Vorderseite dieser ersten Abschlusswand 31.

Wie insbesondere in Figur 1 gezeigt, ist die erste Abschlusswand 31 plattenartig ausgestaltet und besitzt eine zentrale im Querschnitt kreisrunde Öffnung 32, über die die erste Trommelkörper-Stirnseite 17 zugänglich ist, wobei sich der Drehgriff 27 durch die Öffnung 32 nach außen hindurch erstreckt.

Wie insbesondere in Figur 6 gezeigt, besitzt die Öffnung 32 einen kleineren Durchmesser als der Außendurchmesser der vorderen Trommelscheibe 18. Die erste Abschlusswand 31 ist mithin axial zur Trommelachse 14 nach außen der vorderen Trommelscheibe 18 vorgelagert, die aufgrund ihres größeren Außendurchmessers in Axialrichtung nach außen durch die erste Abschlusswand 31 fixiert ist. Parallel zur ersten Abschlusswand 31 ist mit Abstand zu dieser angeordnet eine zweite Abschlusswand 33 vorgesehen, die die zweite Trommelträger-Stirnseite 30 definiert. Die zweite Trommelträger-Stirnseite 30 wird mithin von der Außenseite der zweiten Abschlusswand 33 gebildet.

Wie insbesondere in Figur 1 gezeigt, bilden die beiden Abschlusswände 31, 33 einen Aufnahmeraum 34, in dem der Trommelkörper 13 aufgenommen ist. Die beiden Abschlusswände 31, 33 bilden also eine seitliche Einhausung für den Trommelkörper 13.

Wie weiter in Figur 1 gezeigt, sind die beiden Abschlusswände 31, 33 durch mehrere in Umfangsrichtung der Trommelachse 14 zueinander benachbarte Verbindungsstreben 35 miteinander verbunden.

Im gezeigten Beispielsfall haben die beiden Abschlusswände 31, 33 eine quadratische Form, wobei an den jeweiligen Ecken der Abschlusswände 31, 33 Verbindungsstreben 35 angeordnet sind, die sich jeweils in Axialrichtung der Trommelachse 14 erstrecken und die beiden Abschlusswände 31, 33 miteinander verbinden. Die Verbindungsstreben 35 sind bezüglich den beiden Abschlusswänden 31, 33 als separate Bauteile ausgebildet und werden einerseits an der einen und andererseits an der anderen Abschlusswand 31, 33 mittels geeigneter Befestigungsmittel befestigt. An den Rückseiten der beiden Abschlusswände 31, 33 befinden sich hierzu einander gegenüberliegende, an die Querschnittsform der Verbindungsstreben 35 angepasste Aufnahmeöffnungen 36 zur Aufnahme der Verbindungsstreben 35. Die Verbindungsstreben 35 werden folglich in die beiden zugeordneten Aufnahmeöffnungen 36 an der ersten und an der zweiten Abschlusswand 31, 33 eingesteckt und mittels Befestigungsmitteln sowohl an der einen als auch an der anderen Abschlusswand 31, 33 befestigt.

Wie insbesondere in Figur 1 gezeigt, befinden sich hierzu sowohl an der ersten Abschlusswand 31 als auch an der zweiten Abschlusswand 33 Montageöffnungen 37, die die zugeordneten Abschlusswände 31, 33 in Axialrichtung durchsetzen, wodurch Befestigungsmittel von den jeweiligen Vorderseiten der Abschlusswände 31, 33 zugeführt und mit den Verbindungsstreben 35 verbunden werden können.

Die beiden Abschlusswände 31, 33 besitzen jeweils an der Außenkontur befindliche Randbereiche 38, die gemeinsam mit zueinander benachbarten Verbindungsstreben 35 fensterartige Zugriffsöffnungen 39 bilden, über die das Kabel 22 herausgeführt werden kann.

Gemäß erstem technischen Beispiel sind also in Umfangsrichtung des Leitungsrollers 11 an jeder Seite Zugriffsöffnungen 39 vorgesehen, über die sich ein Auf- oder Abwickeln des Kabels 22 bewerkstelligen lässt. Eine bevorzugte Zugriffsöffnung 39 gibt es hier nicht, d.h. alle Zugriffsöffnungen 39 sind gleichwertig, sodass es für die Bedienung des Leitungsrollers 11 völlig egal ist, wie er auf dem Untergrund steht. Ferner haben die Verbindungsstreben 35 neben ihrer Hauptaufgabe die beiden Abschlusswände 31, 33 miteinander zu verbinden eine Zusatzaufgabe, nämlich sie dienen der Kabelführung beim Aufwickeln des Kabels 22. Das Kabel 22 kommt beim Aufwickeln mit einer der Verbindungsstreben 35 in Kontakt und wird durch diese geführt, sodass ein gleichmäßiges Aufwickeln des Kabels 22 auf den Trommelkörper 13 stattfindet. Auch hier sind wieder alle Verbindungsstreben 35 funktional gleichwertig, d.h. je nach genutzter Zugriffsöffnung 39 wird eine der Verbindungsstreben 35 als Kabelführung genutzt.

Wie insbesondere in Figur 1 gezeigt, bilden die Randbereiche 38 der beiden Abschlusswände 31, 33 bezüglich der Verbindungsstreben 35 quer zur Trommelachse 14 vorstehende Abstellflächen 40. Die Randbereiche 38 der Abschlusswände 31, 33 sind gegenüber den Verbindungsstreben 35 erhaben, sodass der Leitungsroller 11 auf einer der dadurch gebildeten Abstellflächen 40 standsicher abgestellt werden kann.

Im gezeigten Beispielsfall des ersten technischen Beispiels sind die Randbereiche 38 an allen Seiten der Abschlusswände 31, 33 infolge deren quadratischer Form gleich lang, sodass sowohl gleich große Zugriffsöffnungen 39 als auch gleich große Abstellflächen 40 gebildet werden. Es gibt also keine bevorzugte Abstellfläche 40, d.h. die Kabeltrommel kann auf jeder dieser Abstellflächen 40 abgestellt werden. Der Leitungsroller 11 ist also in jeder Abstelllage funktionell wirksam. Der Leitungsroller 11 kann also mit Ausnahme einer Abstellposition, bei der er mit der ersten Leitungsroller-Stirnseite 15 auf dem Untergrund aufliegt, funktionssicher bedient werden, selbst dann, wenn der Leitungsroller 11 mit der zweiten Leitungsroller-Stirnseite 16 auf dem Untergrund aufliegt, da der Drehgriff 27 in dieser Lage gehandhabt werden kann.

Die Figur 1 zeigt ferner, dass die Eckbereiche 41 der Randbereiche 38 der Abschlusswände 31, 33 gegenüber dem Rest der Randbereiche 38 erhaben sind. Gemäß erstem technischen Beispiel werden die Abstellflächen 40 mithin von den erhabenen Eckbereichen 41 der Randbereiche 38 gebildet. Die vordere Abschlusswand 31 besitzt ferner Versteifungsstreben 42, die ausgehend von der zentralen Öffnung 32 in Richtung der jeweiligen Eckbereiche 41 verlaufen. Daraus ergibt sich eine charakteristische X-Form an der vorderen Abschlusswand 31 des Leitungsrollers 11.

Wie insbesondere in Figur 2 dargestellt, besitzt der Leitungsroller 11 wenigstens eine nicht an der ersten Leitungsroller-Stirnseite 15 angeordnete weitere elektrische Schnittstelle 43. Im Beispielsfall ist die weitere elektrische Schnittstelle 43 an der zweiten Leitungsroller-Stirnseite 16 angeordnet. Im konkreten Beispielsfall befindet sich die weitere elektrische Schnittstelle 43 an der zweiten Trommelträger-Stirnseite 30. Gemäß erstem technischen Beispiel ist die weitere elektrische Schnittstelle 43 im Wesentlichen identisch zur elektrischen Schnittstelle 25 an der ersten Trommelkörper-Stirnseite 17 ausgebildet und besitzt demnach mehrere Steckdosen 26, beispielsweise vier an der Zahl. Es ist selbstverständlich möglich, die weitere elektrische Schnittstelle 43 ganz anders als die elektrische Schnittstelle 25 an der ersten Trommelkörper-Stirnseite 17 auszubilden, beispielsweise dort anstelle von Steckdosen 26 oder zusätzlich zu wenigstens einer Steckdose 26 eine Daten-Schnittstelle und/oder wenigstens eine Bus-Schnittstelle und/oder wenigstens eine Lade-Schnittstelle anzubringen.

Wie insbesondere in den Figuren 2, 3, 8 und 9 gezeigt, ist der Leitungsroller 11 mit einer Haspel 44 zum Aufwickeln einer flexiblen Leitung, insbesondere eines weiteren elektrischen Kabels 45 ausgestattet.

Wie insbesondere in Figur 2 dargestellt, ist es möglich, dass das weitere Kabel 45 als Zuleitung einerseits fest mit der Haspel 44 verbunden ist und andererseits ein Stromverteilerelement 46 aufweist oder als Verlängerungskabel mit Stecker und Kupplung ausgebildet ist. Das Stromverteilerelement 46 kann beispielsweise mit mehreren Steckdosen 47, beispielsweise vier an der Zahl, ausgestattet sein.

Wie insbesondere weiterhin in Figur 2 dargestellt, befindet sich die Haspel 44 an der zweiten Leitungsroller-Stirnseite 16, und zwar ist sie beispielsweise am Trommelträger 12 an dessen zweiten Trommelträger-Stirnseite 30 an der Außenseite der zweiten Abschlusswand 33 befestigt.

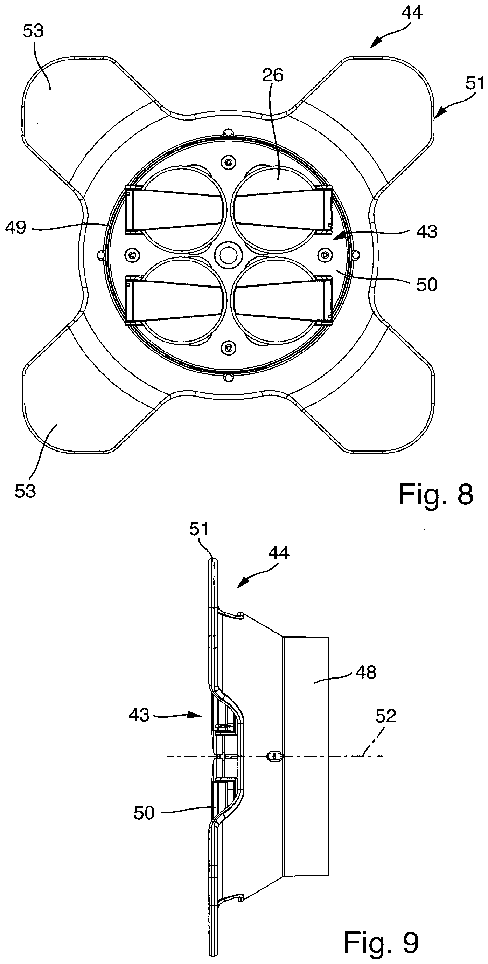

Wie insbesondere in Figur 9 gezeigt, besitzt die Haspel 44 einen zylindrischen Haspelkern 48, der eine zentrale Aufnahmeöffnung 49 zur Aufnahme einer Steckdosenplatte 50 der weiteren elektrischen Schnittstelle 43 aufweist. Die Steckdosenplatte 50 ist am Haspelkern 48 befestigt. Der Haspelkern 48 wiederum wird über geeignete Befestigungsmittel an der zweiten Abschlusswand 33 des Trommelträgers 12 befestigt. Die Haspel 44 besitzt ferner eine Haspelscheibe 51, die im gezeigten Beispielsfall von vier sich in Umfangsrichtung einer Haspelachse 52 verteilt angeordnete Haspelstegen 53 gebildet ist. Die Haspelscheibe 51 ist also nicht als Vollscheibe ausgebildet, sondern wird durch die Haspelstege 53 definiert, wobei im Beispielsfall vier Haspelstege 53 vorgesehen sind, deren an die Außenkanten gelegte Umrisslinie gemeinsam ein Quadrat bilden würden. Insofern liegen sich jeweils zwei Haspelstege 53 diametral bezüglich der Haspelachse 52 gegenüber, wodurch insgesamt eine X-Form entsteht.

Wie insbesondere in Figur 6 dargestellt, ist die Haspel 44 mit ihrem Haspelkern 48 an der zweiten Abschlusswand 33 des Trommelträgers 12 befestigt. An der zweiten Abschlusswand 33 befindet sich im Bereich seiner der zweiten Trommelträger-Stirnseite 30 entgegengesetzten Innenseite ein Lagerzapfen 54, der sich in das Innere des Aufnahmeraums zwischen den beiden Außenabschlusswänden 31, 33 erstreckt. Der Lagerzapfen 54 ist Bestandteil von Lagermitteln für die Drehlagerung des Trommelkörpers 13. Der Trommelkörper 13 besitzt hierzu an seiner hinteren Trommelscheibe 20 eine hülsenartige zylindrische Aufnahme 55, die in den Bereich des Trommelkerns 19 führt. Der Trommelkern 19 ist mit dieser hülsenartigen Aufnahme 55 auf den Lagerzapfen 54 an der zweiten Abschlusswand 33 aufgesteckt und dort drehbar gelagert.

Zur Kontaktierung der weiteren elektrischen Schnittstelle 43 im Bereich der Haspel 44, die sich bei einer Drehbewegung des Trommelkörpers 13 nicht mit dreht, dienen Drehkontakte 60 (Figur 6). Die Kontaktierung der elektrischen Schnittstelle 25 an der ersten Trommelkörper-Stirnseite 17 erfolgt in herkömmlicher Weise über eine interne Verdrahtung im Trommelkern 19 oder kann alternativ über einen Drehkontakt erfolgen.

Insgesamt wird durch den sehr stabilen Trommelträger 12, der den Trommelkörper 13 gehäuseartig einhaust und zweckmäßigerweise aus stabilem Kunststoffmaterial besteht, ein sehr robuster Leitungsroller 11, insbesondere Kabeltrommel, geschaffen, die auch für den Einsatz bei widrigsten Einsatzbedingungen geeignet ist. Die beiden Abschlusswände 31, 33 schützen den Trommelkörper 13 und trotzdem lässt sich die Kabeltrommel bzw. der Leitungsroller 11 einfach bedienen, da ein Zugriff über die fensterartigen Zugriffsöffnungen 39 von allen Seiten her möglich ist.

Ferner werden durch die Verbindungsstreben 35 Kabelführungen beim Aufwickeln des Kabels 22 geschaffen. Ferner lässt sich der Leitungsroller 11, insbesondere die Kabeltrommel leicht transportieren, da jede der Verbindungsstreben 35 als Hand-/Traggriff genutzt werden kann. Der robuste Leitungsroller 11, der als eine Art Box ausgebildet ist, lässt sich auch für weitere Zwecke nutzen, nämlich als Sitzgelegenheit, beispielsweise Hocker oder als Montageunterlage bzw. Montageauflage. Beispielsweise wäre es möglich, zwei solcher Leitungsroller 11 mit einem Brett oder einer Diele zu verbinden, die dann als Abstellfläche für Baumaterialien oder gar als Trittfläche benutzt werden kann.

Durch die wenigstens zwei elektrischen Schnittstellen 25, 43 lassen sich verschiedenartigste elektrische Verbraucher anschließen. Neben dem üblichen Anschluss von elektrischen Verbraucher in Form von Elektrowerkzeugen lassen sich beispielsweise auch bei der Ausstattung einer der elektrischen Schnittstellen 25, 43 mit einer Ladestation Akkus aufladen oder es ist über eine geeignete Lade-Schnittstelle die Aufladung von Handys, Smartphones oder dergleichen möglich.

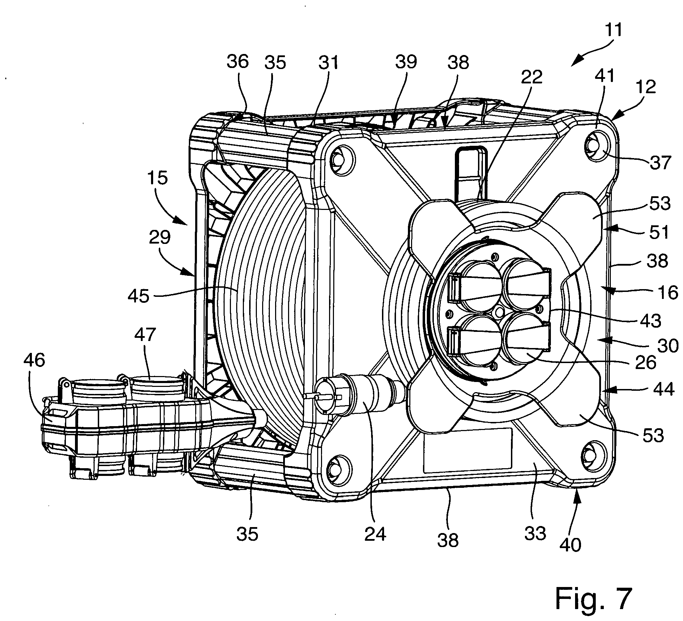

Die Figur 7 zeigt ein zweites technisches Beispiel des Leitungsrollers 11. Das zweite technische Beispiel unterscheidet sich von dem zuvor beschriebenen ersten technischen Beispiel dadurch, dass das Zuleitungs-Netzkabel 22 der Haspel 44 zugeordnet ist und dort auf- bzw. abwickelbar ist. Auf dem Trommelkörper 13 befindet sich das weitere Kabel 45 mit dem Stromverteilerelement 46 am Ende, so dass dieser Leitungsroller 11 auch als eine Art Verlängerungs-Leitungsroller genutzt werden kann.

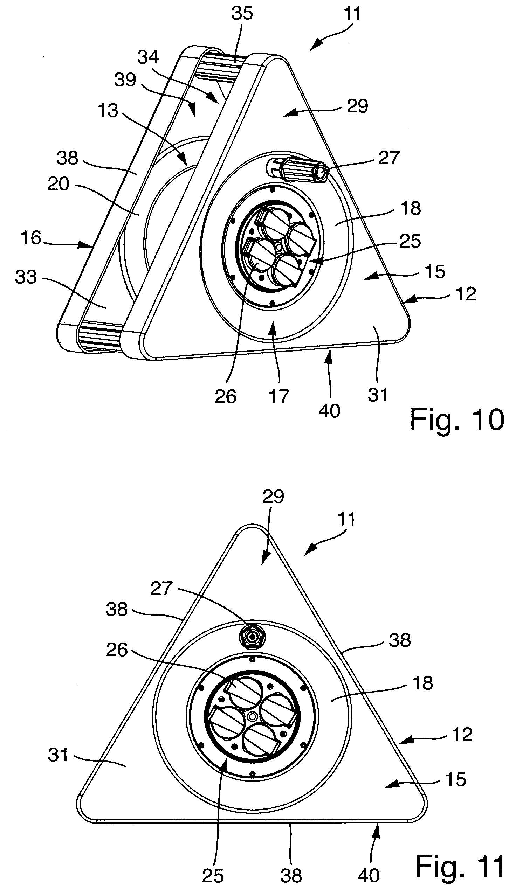

Die Figuren 10 und 11 zeigen ein drittes technisches Beispiel des Leitungsrollers 11. Das dritte technische Beispiel unterscheidet sich von den zuvor beschriebenen technischen Beispielen durch die andersartige Form der Abschlusswände 31, 33. Im Gegensatz zu den quadratischen Abschlusswänden 31, 33 der ersten beiden technischen Beispiele, sind hier dreiecksförmige Abschlusswände 31, 33 vorgesehen. Auch hier befinden sich Verbindungsstreben 35 zwischen den beiden Abschlusswände 31, 33, die diese auf Abstand halten. Die Randbereiche 38 der Abschlusswände 31, 33 sind gleichlang, wodurch die Abschlusswände 31, 33 gleichseitige Dreiecke bilden, die gleichgroße Abstellflächen 40 aufweisen. Im Gegensatz zu den zuvor beschriebenen technischen Beispielen werden die Abstellflächen 40 durch die gesamten Randbereiche 38 der Abschlusswände 31, 33 gebildet.

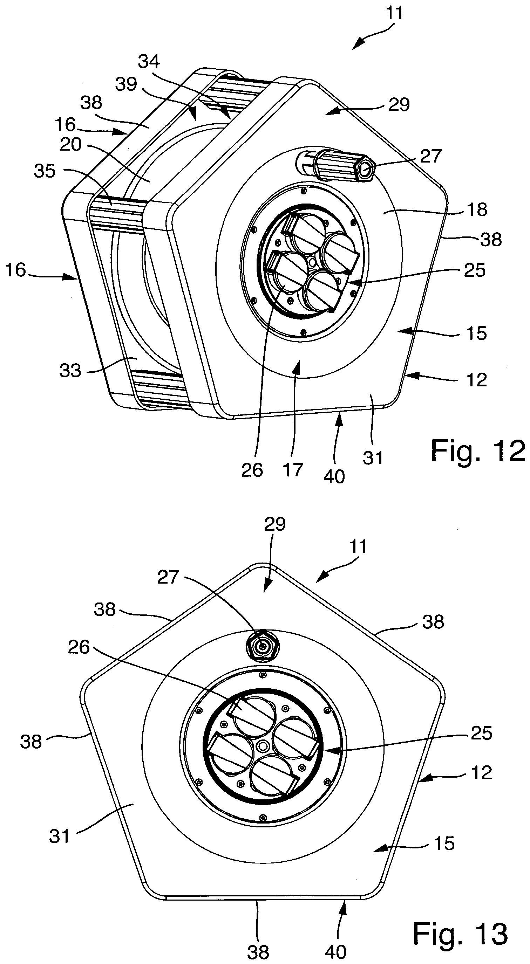

Die Figuren 12 und 13 zeigen ein viertes technischen Beispiel des Leitungsrollers 11. Das vierte technische Beispiel unterscheidet sich von den zuvor beschriebenen technischen Beispielen ebenfalls durch die andersartige Form der Abschlusswände 31, 33. Es sind hier fünfeckige Abschlusswände 31, 33 vorgesehen. Zweckmäßigerweise ebenfalls mit jeweils gleichlangen Randbereichen 38, wodurch regelmäßige Fünfecke entstehen. Auch hier bilden die kompletten Randbereiche 38 der Abschlusswände 31, 33 die Abstellflächen 40.

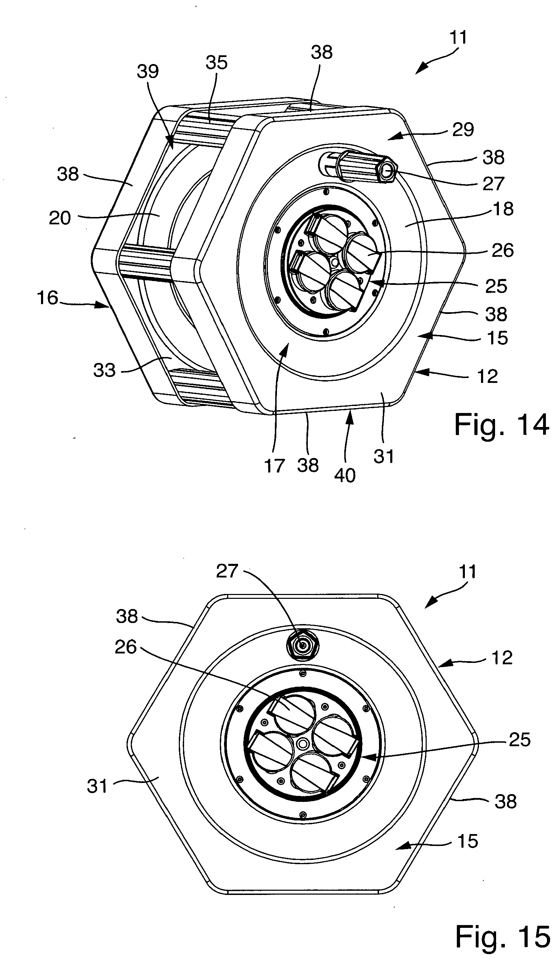

Schließlich zeigen die Figuren 14 und 15 ein fünftes technisches Beispiel des Leitungsrollers 11. Das fünfte technische Beispiel unterscheidet sich von den zuvor beschriebenen technischen Beispielen ebenfalls durch die andersartige Gestalt bzw. Form der Abschlusswände 31, 33. Es sind hier sechseckige Abschlusswände 31, 33 vorgesehen. Auch hier werden die Abstellflächen 40 von den kompletten Randbereichen 38 der Abschlusswände 31,33 gebildet.

## Patentansprüche

1. Leitungsroller, insbesondere Kabeltrommel, mit einer ersten Leitungsroller-Stirnseite (15) und einer dieser entgegengesetzten zweiten Leitungsroller-Stirnseite (16), und mit einem an einem Trommelträger (12) um eine Trommelachse (14) drehbar gelagerten Trommelkörper (13) zum Aufwickeln einer flexiblen Leitung, insbesondere Kabel (22), wobei an der ersten Leitungsroller-Stirnseite (15) wenigstens eine elektrische Schnittstelle (25) zur Stromversorgung wenigstens eines elektrischen Verbrauchers angeordnet ist, wobei der Leitungsroller ferner über wenigstens eine nicht an der ersten Leitungsroller-Stirnseite (15) angeordnete weitere elektrische Schnittstelle (43) verfügt und die elektrische Schnittstelle (25) und/oder die weitere elektrische Schnittstelle (43) Steckdosen (26) zum Anschluss elektrischer Verbraucher aufweist, **dadurch gekennzeichnet, dass** die elektrische Schnittstelle (25) und/oder die weitere elektrische Schnittstelle (43) wenigstens eine Daten-Schnittstelle und/oder wenigstens eine Bus-Schnittstelle und/oder eine USB-Schnittstelle aufweist, wobei der Trommelträger (12) einer der ersten Leitungsroller-Stirnseite (15) zugeordnete erste Trommelträger-Stirnseite (29) und eine dieser entgegengesetzte zweite Trommelträger-Stirnseite (30) aufweist, wobei die weitere elektrische Schnittstelle (43) am Trommelträger (12), an dessen zweiter Trommelträger-Stirnseite (30) angeordnet ist.

2. Leitungsroller nach Anspruch 1, **dadurch gekennzeichnet, dass** die elektrische Schnittstelle (25) an einer der ersten Leitungsroller-Stirnseite (15) zugeordneten ersten Trommelkörper-Stirnseite (17) angeordnet ist.

3. Leitungsroller nach einem der vorhergehenden Ansprüche, **dadurch gekennzeichnet, dass** die Steckdosen (26) zum Anschluss von Leuchten, Lampen, Elektrowerkzeuge oder Radio dienen.

4. Leitungsroller nach Anspruch 3, **dadurch gekennzeichnet, dass** die elektrische Schnittstelle (25) und/oder die weitere elektrische Schnittstelle (43) wenigstens eine Lade-Schnittstelle aufweist.

5. Leitungsroller nach einem der vorhergehenden Ansprüche, **dadurch gekennzeichnet, dass** der Trommelträger (12) gehäuseartig ausgebildet ist, mit einer die erste Trommelträger-Stirnseite (29) definierten ersten Abschlusswand (31) und einer die zweite Trommelträger-Stirnseite (30) definierenden zweiten Abschlusswand (33), die gemeinsam einen Aufnahmeraum (34) begrenzen, in dem der Trommelkörper (13) aufgenommen ist.

6. Leitungsroller nach Anspruch 5, **dadurch gekennzeichnet, dass** der Aufnahmeraum (34) peripher um die Trommelachse (14) partiell offen ist.

7. Leitungsroller nach Anspruch 5 oder 6, **dadurch gekennzeichnet, dass** die beiden Abschlusswände (31, 33) durch mehrere in Umfangsrichtung der Trommelachse (14) verteilt angeordnete Verbindungsstreben (35) miteinander verbunden sind.

8. Leitungsroller nach Anspruch 7, **dadurch gekennzeichnet, dass** in Umfangsrichtung der Trommelachse (14) zueinander benachbarte Verbindungsstreben (35) und zugeordnete Randbereiche (38) der Abschlusswände (31, 33) fensterartige Zugriffsöffnungen (39) bilden.

9. Leitungsroller nach Anspruch 7 oder 8, **dadurch gekennzeichnet, dass** die sich zwischen benachbarten Verbindungsstreben (35) erstreckende Randbereiche (38) gleichlang sind.

10. Leitungsroller nach einem der Ansprüche 7 bis 9, **dadurch gekennzeichnet, dass** die Abschlusswände (31, 33) außen polygonförmig konturiert sind.

11. Leitungsroller nach einem der Ansprüche 7 bis 10, **dadurch gekennzeichnet, dass** die Randbereiche (38) bezüglich der Verbindungsstreben (35) quer zur Trommelachse (14) vorstehende Abstellflächen (40) bilden.

12. Leitungsroller nach einem der vorhergehenden Ansprüche, **dadurch gekennzeichnet, dass** der Trommelkörper (13) eine der ersten Trommelkörper-Stirnseite (17) entgegengesetzte zweite Trommelkörper-Stirnseite aufweist, der die die zweite Trommelträger-Stirnseite (30) definierende Abschlusswand (33) des Trommelträgers (12) vorgelagert ist.

13. Leitungsroller nach einem der Ansprüche 5 bis 12, **dadurch gekennzeichnet, dass** der zweiten Abschlusswand (33) Lagermittel zur Drehlagerung des Trommelkörpers (13) zugeordnet sind, wobei vorzugsweise an der zweiten Abschlusswand (33) ein zu den Lagermitteln gehörender Lagerzapfen (54) angeordnet, insbesondere angeformt ist, auf dem der Trommelkörper (13) drehbar gelagert ist.

## Claims

1. Cable reel, in particular cable drum, with a first cable reel end face (15) and a second cable reel end face (16) opposite the former, and with a drum body (13), rotatably mounted on a drum support (12) around a drum axis (14), for winding up a flexible line, in particular cable (22), wherein there is provided on the first cable reel end face (15) at least one electrical interface (25) for the power supply of at least one electrical load, wherein the cable reel also has at least one further electrical interface (43) not provided on the first cable reel end face (15), and the electrical interface (25) and/or the further electrical interface (43) have or has sockets (26) for the connection of electrical loads, **characterised in that** the electrical interface (25) and/or the further electrical interface (43) have or has at least one data interface and/or at least one bus interface and/or a USB interface, wherein the drum support (12) has a first drum support end face (29) assigned to the first cable reel end face (15) and a second drum support end face (30) opposite the first drum support end face, wherein the further electrical interface (43) is provided on the drum support (12) on its second drum support end face (30).

2. Cable reel according to claim 1, **characterised in that** the electrical interface (25) is located on a first drum body end face (17) assigned to the first cable reel end face (15).

3. Cable reel according to any of the preceding claims, **characterised in that** the sockets (26) serve for the connection of lights, lamps, power tools or radio.

4. Cable reel according to claim 3, **characterised in that** the electrical interface (25) and/or the further electrical interface (43) have or has at least one charging interface.

5. Cable reel according to any of the preceding claims, **characterised in that** the drum support (12) is designed in the form of a housing, with a first end wall (31) defining the first drum support end face (29) and a second end wall (33) defining the second drum support end face (30), and together bounding a mounting space (34) in which the drum body (13) is accommodated.

6. Cable reel according to claim 5, **characterised in that** the mounting space (34) is partly open peripherally around the drum axis (14).

7. Cable reel according to claim 5 or 6, **characterised in that** the two end walls (31, 33) are joined together by several connecting struts (35) distributed in the circumferential direction of the drum axis (14).

8. Cable reel according to claim 7 **characterised in that**, in the circumferential direction of the drum axis (14), adjacent connecting struts (35) and assigned edge areas (38) of the end walls (31, 33) form window-like access openings (39).

9. Cable reel according to claim 7 or 8, **characterised in that** the edge areas (38) extending between adjacent connecting struts (35) are of equal length.

10. Cable reel according to any of claims 7 to 9, **characterised in that** the end walls (31, 33) have a polygonal contour on the outside.

11. Cable reel according to any of claims 7 to 10, **characterised in that** the edge areas (38) form setting-down surfaces (40), protruding transversely to the drum axis (14), relative to the connecting struts (35).

12. Cable reel according to any of the preceding claims, **characterised in that** the drum body (13) has a second drum body end face opposite the first drum body end face (17), and mounted in front of the second end wall (33) of the drum support (12) defining the second drum support end face (30).

13. Cable reel according to any of claims 5 to 12, **characterised in that** bearing means for rotary mounting of the drum body (13) are assigned to the second end wall (33), wherein preferably a bearing pin (54) belonging to the bearing means and on which the drum body (13) is rotatably mounted, is fitted to, in particular moulded to, the second end wall (33)

## Revendications

1. Enrouleur, en particulier dévidoir de câble, avec un premier côté frontal d'enrouleur (15) et un deuxième côté frontal d'enrouleur (16) opposé à celui-ci, et avec un corps de dévidoir (13) monté au niveau d'un support de dévidoir (12) de manière à pouvoir tourner autour d'un axe de dévidoir (14), servant à enrouler une ligne flexible, en particulier un câble (22), dans lequel au moins une interface électrique (25) servant à alimenter en courant au moins un consommateur électrique est disposée au niveau du premier côté frontal d'enrouleur (15), dans lequel l'enrouleur dispose en outre d'au moins une autre interface électrique (43) qui n'est pas disposée au niveau du premier côté frontal d'enrouleur (15) et l'interface électrique (25) et/ou l'autre interface électrique (43) présentent des prises enfichables (26) servant au raccordement de consommateurs électriques, **caractérisé en ce que** l'interface électrique (25) et/ou l'autre interface électrique (43) présentent au moins une interface de données et/ou au moins une interface de bus et/ou une interface USB, dans lequel le support de dévidoir (12) présente un premier côté frontal de support de dévidoir (29) associé au premier côté frontal d'enrouleur (15) et un deuxième côté frontal de support de dévidoir (30) opposé à celui-ci, dans lequel l'autre interface électrique (43) est disposée au niveau du support de dévidoir (12), au niveau de son deuxième côté frontal de support de dévidoir (30).

2. Enrouleur selon la revendication 1, **caractérisé en ce que** l'interface électrique (25) est disposée au niveau d'un premier côté frontal de corps de dévidoir (17) associé au premier côté frontal d'enrouleur (15).

3. Enrouleur selon l'une quelconque des revendications précédentes, **caractérisé en ce que** les prises enfichables (26) servent au raccordement de systèmes d'éclairage, de lampes, de véhicules électriques ou de radio.

4. Enrouleur selon la revendication 3, **caractérisé en ce que** l'interface électrique (25) et/ou l'autre interface électrique (43) présentent au moins une interface de charge.

5. Enrouleur selon l'une quelconque des revendications précédentes, **caractérisé en ce que** le support de dévidoir (12) est réalisé à la manière d'un boîtier, avec une première paroi de terminaison (31) définissant le premier côté frontal de support de dévidoir (29) et une deuxième paroi de terminaison (33) définissant le deuxième côté frontal de support de dévidoir (30), qui délimitent conjointement un espace de logement (34), dans lequel le corps de dévidoir (13) est logé.

6. Enrouleur selon la revendication 5, **caractérisé en ce que** l'espace de logement (34) est ouvert en partie en périphérie autour de l'axe de dévidoir (14).

7. Enrouleur selon la revendication 5 ou 6, **caractérisé en ce que** les deux parois de terminaison (31, 33) sont reliées entre elles par plusieurs entretoises de liaison (35) disposées de manière répartie dans la direction périphérique de l'axe de dévidoir (14).

8. Enrouleur selon la revendication 7, **caractérisé en ce que** des entretoises de liaison (35) adjacentes les unes par rapport aux autres dans la direction périphérique de l'axe de dévidoir (14) et des zones de bord (38) associées des parois de terminaison (31, 33) forment des ouvertures d'accès (39) de type fenêtre.

9. Enrouleur selon la revendication 7 ou 8, **caractérisé en ce que** les zones de bord (38) s'étendant entre des entretoises de liaison (35) adjacentes sont de même longueur.

10. Enrouleur selon l'une quelconque des revendications 7 à 9, **caractérisé en ce que** les parois de terminaison (31, 33) sont contourées côté extérieur de manière à présenter une forme polygonale.

11. Enrouleur selon l'une quelconque des revendications 7 à 10, **caractérisé en ce que** les zones de bord (38) forment par rapport aux entretoises de liaison (35) des surfaces de rangement (40) faisant saillie de manière transversale par rapport à l'axe de dévidoir (14).

12. Enrouleur selon l'une quelconque des revendications précédentes, **caractérisé en ce que** le corps de dévidoir (13) présente un deuxième côté frontal de corps de dévidoir opposé au premier côté frontal de corps de dévidoir (17), en amont duquel est montée la paroi de terminaison (33), définissant le deuxième côté frontal de support de dévidoir (30), du support de dévidoir (12).

13. Enrouleur selon l'une quelconque des revendications 5 à 12, **caractérisé en ce que** des moyens de montage servant au montage rotatif du corps de dévidoir (13) sont associés à la deuxième paroi de terminaison (33), dans lequel est disposé, en particulier est moulé, de préférence au niveau de la deuxième paroi de terminaison (33), un tourillon de montage (54) faisant partie des moyens de montage, sur lequel le corps de dévidoir (13) est monté de manière à pouvoir tourner.
